# EUROPÄISCHE PATENTSCHRIFT

(11) **EP 0 286 186 B1**
(45) Veröffentlichungstag und Bekanntmachung des Hinweises auf die Patenterteilung: **14.07.1993**
(21) Anmeldenummer: 88200642.2
(22) Anmeldetag: 06.04.1988
(51) Int. Cl.: G02B 6/42

(54) **Verfahren zur Herstellung einer Vorrichtung zur Kopplung eines Lichtwellenleiters mit einem optischen Bauelement**
Production method of a device for coupling a light guide to an optical component
Méthode de fabrication d'un dispositif pour le couplage d'une fibre optique avec un élément optique

(30) Priorität: 10.04.1987 DE 3712295
(43) Veröffentlichungstag der Anmeldung: 12.10.1988
(73) Patentinhaber: Philips Patentverwaltung GmbH, 22335 Hamburg (DE); Philips Electronics N.V., 5621 BA Eindhoven (NL)
(72) Erfinder: Feulner, Alfred, D-8520 Erlangen (DE); Schmitt, Norbert, D-8500 Nürnberg 60 (DE)
(74) Vertreter: Peuckert, Hermann, Dipl.-Ing.

(56) Entgegenhaltungen:
- DE-A- 3 121 870
- FR-A- 2 305 747
- GB-A- 2 099 605
- GB-A- 2 143 651

## Beschreibung

Die Erfindung betrifft ein Verfahren zur Herstellung einer Vorrichtung zur Kopplung eines in einem vorzugsweise zylindrischen Steckerstift gehaltenen Endabschnitts eines Lichtwellenleiters mit einem in einer Buchse gehaltenen optischen Bauelement, wobei der Steckerstift einen die Einstecktiefe begrenzenden Bund und die Einstecköffnung der Buchse eine Anschlagfläche aufweist. Eine solche Kopplungsvorrichtung ist aus DE-OS 31 21 870 bekannt.

Zur optischen Verbindung von optischen Bauelementen mit Lichtwellenleitern sind Kopplungsvorrichtungen erforderlich, welche sehr präzise ausgeführt sein müssen. Soll die Kopplungsvorrichtung lösbar ausgeführt sein, damit ein optisches Bauelement mit unterschiedlichen Lichtwellenleitern bzw. ein Lichtwellenleiter an verschiedene optische Bauelemente angekoppelt werden kann, so ist eine Steckverbindung zweckmäßig. Deren Teile müssen ebenfalls sehr präzise ausgeführt sein, damit einerseits die Kopplungsverluste auf ein Minimum reduzierbar sind und andererseits bei Kopplung verschiedener Kopplungsvorrichtungsteile miteinander keine Unterschiede im Kopplungsgrad auftreten. Hierzu ist es erforderlich, daß der Abstand der Lichtwellenleiterstirnfläche von der Oberfläche des optischen Bauelements bei allen Kopplungsvorrichtungsteilen jeweils möglichst exakt gleich ist.

Der Erfindung liegt daher die Aufgabe zugrunde, ein Verfahren zur Herstellung einer Kopplungsvorrichtung der eingangs angegebenen Art anzugeben, das möglichst einfach ist und nur möglichst einfache Mittel erfordert und dennoch sehr gut reproduzierbare Ergebnisse gewährleistet.

Diese Aufgabe wird für eine Kopplungsvorrichtung der eingangs genannten Art dadurch gelöst, daß ein erster Kaliber in die Einstecköffnung eingesetzt wird; daß das optische Bauelement auf der der Einstecköffnung für den Steckerstift gegenüberliegenden Seite der Buchse in einem vom ersten Kaliber definierten Abstand von der äußeren Anschlagfläche der Einstecköffnung befestigt wird und daß nach dem Befestigen des Lichtwellenleiterendabschnitts im Steckerstift und dem Planschleifen der Steckerstiftstirnfläche eine Anschlaghülse als Bund auf dem Steckerstift befestigt wird, wobei mittels eines zweiten Kalibers der Abstand der der Steckerstiftstirnfläche zugewandten Anschlagfläche der Anschlaghülse von der Steckerstiftstirnfläche auf ein vorbestimmtes Maß eingestellt wird.

Die Erfindung soll im folgenden anhand eines in den Figuren 1 bis 3 dargestellten Ausführungsbeispiels näher beschrieben und erläutert werden.

Es zeigen:
Fig. 1 eine vollständige Kopplungsvorrichtung.
Fig. 2 eine Buchse bei der Herstellung.
Fig. 3 einen Steckerstift bei der Herstellung.

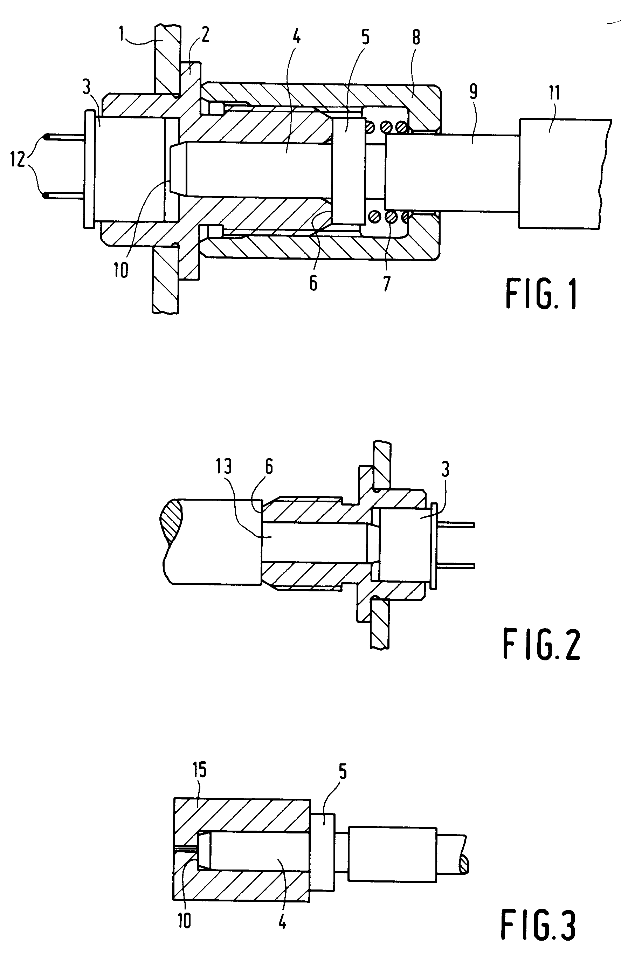

Bei der in Fig. 1 dargestellten Kopplungsvorrichtung trägt eine in einer Wand 1 eines Gerätes oder eines Geräteteils montierte Buchse 2 auf einer Seite ein optisches Bauelement 3, beispw. eine Fotodiode. Auf der anderen Seite der Buchse 2 ist ein zylindrischer Steckerstift 4 eingesteckt, der mit der einen Seite eines Bundes 5 an der äußeren Anschlagfläche 6 der Buchse 2 anliegt. Die Buchse 2 trägt auf dieser Seite ein Außengewinde. Mittels einer auf diesem Außengewinde aufgeschraubten Schraubhülse 8 wird über eine Spiralfeder 7, welche auf der anderen Seite des Bundes 5 anliegt, der Steckerstift 4 in die Buchse 2 gepresst. Zwischen der Oberfläche der Fotodiode 3 und der gegenüberliegenden Stirnfläche 10 des Steckerstifts 4 besteht ein definierter Abstand, der immer exakt eingehalten werden muß, damit reproduzierbare Kopplungsgrade erreicht werden und andererseits eine Berührung der wirksamen Oberfläche der Fotodiode durch den Steckerstift und somit eine Beschädigung der aktiven Oberfläche vermieden wird. In einer koaxialen Bohrung im Innern des Steckerstifts 4 verläuft ein Lichtwellenleiter bis zur Stirnfläche 10 des Steckerstifts. Ein zusätzlich zur äußeren Umhüllung 9 des Lichtwellenleiters vorgesehener Mantel 11 dient als Knickschutz. Durch die beschriebene Anordnung ist der an der Stirnfläche 10 des Steckerstifts 4 anschließende Lichtwellenleiterabschnitt mit seiner Achse konzentrisch zum Mittelpunkt der optisch wirksamen Fläche der Fotodiode 3 und senkrecht zu dieser ausgerichtet. Mittels der Anschlußstifte 12 ist die Fotodiode an eine elektrische Schaltung anschließbar.

Bei der Herstellung der Koppelvorrichtung wird zunächst anstelle eines Steckerstiftes - wie Fig. 2 zeigt - ein erster Kaliber 13 eingesetzt und von der anderen Seite her die Fotodiode 3 eingeführt, bis sie die Stirnfläche des Kalibers 13 berührt. Sodann wird die Fotodiode in dieser Position in der Buchse befestigt, beispielsweise eingeklebt. Auf diese Weise ist ein definierter Abstand zwischen der optisch wirksamen Fläche der Fotodiode 2 und der äußeren Anschlagfläche 6 an der Buchse 2 hergestellt.

Bei der Montage des Lichtwellenleiters im Steckerstift 4 wird zunächst der Lichtwellenleiter in der koaxialen Bohrung des Steckerstifts verklebt. Danach wird die Stirn fläche gemeinsam mit dem Lichtwellenleiter abgeschliffen und zwar solange, bis eine optisch einwandfreie Oberfläche des Lichtwellenleiters erzielt ist. Es ist nicht möglich, bei einem Steckerstift mit angedrehtem Bund von vornherein einen definierten Abstand zwischen der Stirnfläche des Steckerstifts und einer Anschlagfläche am Bund einzuhalten, weil durch den Schleifvorgang bei jedem Steckerstift unterschiedlich viel Material abgetragen wird. Wie in Fig. 3 gezeigt, wird daher auf den Steckerstift 4 eine Anschlaghülse 5 aufgebracht und dann der Steckerstift in ein zweites Kaliber 15 eingesteckt, bis die Stirnfläche 10 des Steckerstiftes 4 die innere Endfläche des zweiten Kalibers erreicht hat. Sodann wird die Anschlaghülse 5 gegen die Anschlagfläche am zweiten Kaliber 15 gedrückt und auf dem Steckerstift befestigt, zum Beispiel festgeklebt. Auf diese Weise ist ein definierter Abstand zwischen der Anschlagfläche des Bundes 5 und der Stirnfläche 10 des Steckerstiftes erzielt.

Das Verfahren hat den Vorteil, daß es mit einfachen, herkömmlichen Mitteln schnell und bequem ausführbar ist und eine große Präzision der auf diese Weise hergestellten Koppelanordnungen gewährleistet ist. Die Steckerstifte und die Buchsen sind jeweils austauschbar, ohne daß große Unterschiede im Kopplungsgrad auftreten. Die Kaliber sind als Drehteile sehr präzise und dabei mit geringem Kostenaufwand herstellbar.

## Patentansprüche

1. Verfahren zur Herstellung einer Vorrichtung zur Kopplung eines in einem zylindrischen Steckerstift (4) gehaltenen Endabschnitts eines Lichtwellenleiters mit einem in einer Buchse (2) gehaltenen optischen Bauelement (3), wobei der Steckerstift einen die Einstecktiefe begrenzenden Bund und die Einstecköffnung der Buchse eine Anschlagfläche (6) aufweist, mit den Schritten, daß ein erster Kaliber in die Einstecköffnung eingesetzt wird;
daß das optische Bauelement (3) auf der der Einstecköffnung für den Steckerstift (4) gegenüberliegenden Seite in einem vom ersten Kaliber (13) definierten Abstand von der äußeren Anschlagfläche (6) der Einstecköffnung befestigt wird; und daß nach dem Befestigen des Lichtwellenleiterendabschnitts im Steckerstift und dem Planschleifen der Steckerstiftstirnfläche eine Anschlaghülse als Bund (5) auf dem Steckerstift (4) befestigt wird, wobei mittels eines zweiten Kalibers (15) der Abstand der der Steckerstiftstirnfläche zugewandten Anschlagfläche der Anschlaghülse von der Steckerstiftstirnfläche auf ein vorbestimmtes Maß eingestellt wird.

## Claims

1. A method of producing a device for coupling an optical waveguide end section accommodated in a cylindrical plug pin (4) to an optical component (3) accommodated in a socket (2), the plug pin having a collar which limits the insertion depth and the insertion aperture of the socket having a stop surface (6), said method comprising the following steps: a first gage is inserted into the insertion aperture, the optical component (3) is fitted at the side opposite the insertion aperture of the plug pin (4) at a distance defined by said first gage (13), from the external stop surface (6) of the insertion aperture, and after securing the optical waveguide end section in the plug pin and surface grinding the plug pin front face a stop sleeve is fitted on the plug pin (4) as the collar (5), the distance of the stop sleeve stop surface facing the plug pin front face from the plug pin front face being set to a predetermined value by means of a second gage (15).

## Revendications

1. Procédé pour la fabrication d'un dispositif conçu pour coupler une partie terminale d'une fibre optique maintenue dans une fiche mâle cylindrique (4) à un constituant optique (3) maintenu dans une fiche femelle (2), la fiche mâle présentant une collerette limitant la profondeur d'insertion et l'ouverture d'insertion de la fiche femelle présentant une surface d'arrêt (6), comportant les étapes que le constituant optique (3) est fixé du côté situé à l'opposé de l'ouverture d'insertion destinée pour la fiche mâle (4), à une distance de la surface d'arrêt extérieure (6) de l'ouverture d'insertion définie par le premier calibre (13) et que, après la fixation de la partie terminale de la fibre optique dans la fiche mâle et la rectification de la face de front de la fiche mâle, un manchon d'arrêt faisant fonction de collerette (5) est fixé sur la fiche mâle (4), la distance entre la surface d'arrêt située à l'opposé de la face avant de la fiche mâle et le manchon d'arrêt fixé sur la face de front de la fiche mâle étant ajustée sur une valeur prédéterminée à l'aide d'un deuxième calibre (15).
